# EUROPEAN PATENT SPECIFICATION

(11) **EP 0 398 307 B1**
(45) Date of publication and mention of the grant of the patent: **22.02.1995**
(21) Application number: 90109270.0
(22) Date of filing: 16.05.1990
(51) Int. Cl.: B60K 28/14, B60R 22/32, E05B 65/20, E05F 15/20

(54) **Integral automatic system for the protection and rescue of the passengers in automobiles engaged in accidents**
Völlig selbsstätiges System für den Schutz und Hilfe für die Insassen von in Unfälle verwickelten Kraftwagen
Système automatique intégral pour la protection et le secours des occupants d'automobiles engagées dans des accidents

(30) Priority: 16.05.1989 ES 8901647
(43) Date of publication of application: 22.11.1990
(73) Proprietor: Busquets Busquets, Albert, E-08006 Barcelona (ES)
(72) Inventor: Busquets Busquets, Albert, E-08006 Barcelona (ES)
(74) Representative: Körner, Ekkehard, Dipl.-Ing.

(56) References cited:
- EP-A- 0 027 747
- WO-A-82/03134
- FR-A- 2 446 203
- FR-A- 2 571 000

## Description

The present invention refers to an automatic system for the protection and rescue of the passengers of an automotive vehicle engaged in an accident, as set forth in the preamble of the claim. A system of this kind is known from FR-A-2 446 203.

As the automobile technology constitutes a sophisticated and extraordinarily developed field where it is difficult to develop revolutionary novelties, there are many improvements which are attained by and by, among other reasons because the production capacities and the investments which are necessary to introduce such modifications do not permit a different handling. One of the tendencies which are more emphasized in the actual automobile industry is the object to avoid or to reduce the effect of traffic accidents originating from collisions of any kind, tumbling over and the like.

The actual state of the art shows various solutions adapted to reduce the damage resulting from collision and to protect the passengers against the structure of the cabin. It is known that the location of masses before the passengers, like the engine of the vehicle, is advantageous. It has also been proven that use of seat belts is effective, also combined with the use of automatic air bags which constitute means having shown to be useful in a considerable percentage of accidents among which may be included those caused by lateral impacts. In the same way, the new safety requirements take also the general risk of wheel slip upon braking into account, so that in active systems the principle of measuring the angular velocity of the wheels is used to modulate the braking pressure in a manner that the wheels are not blocked

All these systems which may be regarded to form generally the actual state of the art are specifically designated to reduce the intensity of the accident and to protect the driver and the passengers against damage inevitably produced by the shock and by the series of impacts developed thereby.

The system of aformentioned FR-A-2 446 203 is designated to prevent risks which may appear when an accident has happened, and to facilitate the rescue of the passengers. It comprises an impact sensor to interrupt the battery circuit of the vehicle, and a device for releasing the seat belts from their fixtures following an impact.

From WO 82/3134 a device for activating a switching element by a deceleration is known, comprising a frame, a mass movable in at least one horizontal direction and carried by said frame and transmission means connected with the frame and engaging said mass for transferring movements of the mass to the switching element, comprising guide means connected with the frame for slidably guiding the mass in a horizontal direction. This device is described to be suitable for unlocking a safety belt and a door lock and to be coupled with a member adapted to cut an electric current and with a member adapted to block a fuel feed. However, by means of the disclosed device, the aforementioned operations can be done at a time only, so that e.g. unlocking of a safety belt will be done at the same time as unlocking a door lock, which is highly undesirable.

It is the object of the invention to provide an automatic system as said forth in the preamble of the claim which provides more safety to the passengers of a vehicle when engaged in an accident.

This object is attained by the features of the claim.

When an accident has happened, locking or securing of the doors, which is an actual safety system, converts into a real danger; the hermetic closure of the windows creates another danger in such events; the existence of electric current in the circuits may also result in a great and unnecessary danger, as is the eventual spilling of fuel; finally, the seat belts fulfilling their task at the same time convert into a great impediment. These functions being successively suppressed or inverted, the central instruction unit finally disconnects automatically all the circuits without any electric current, free fuel, and facilitates the automatic opening of the windows, doors and seat belts, the rescue of the passengers being always taken into suitable consideration.

In order to facilitate the explanation, reference is made to the accompanying description of a drawing sheet in which an embodiment is shown as an example.

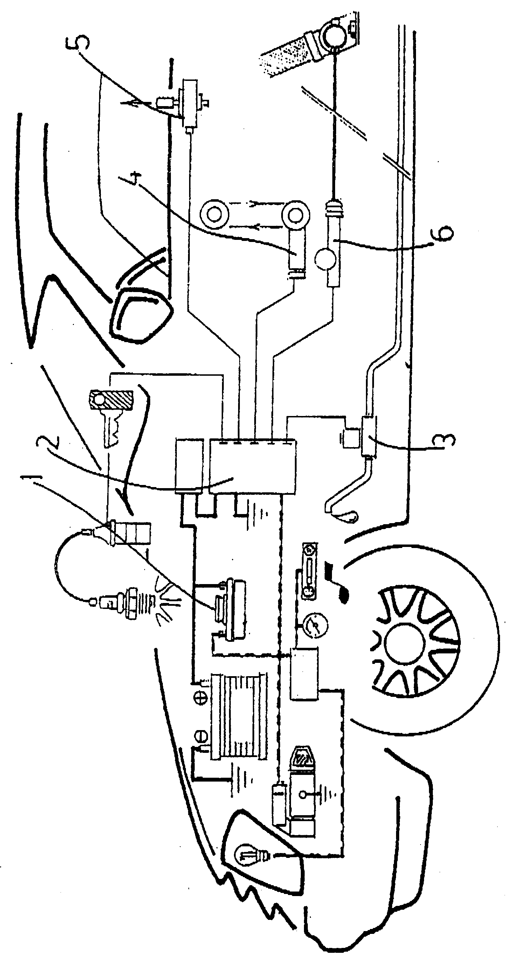

In the drawing :
The only figure represents a schematic partial view of an automotive vehicle which is equipped with a system of the invention, which system consists of a combination of mechanical and electrical elements connected to a central electronic instruction unit, designated by 2, and which in turn is connected to an impact sensor/ battery interrupter, designated by 1, operated by impact of high breaking load, and which is adapted to initiate the cycle. The system comprises additionally the following devices: a fuel electrovalve 3 with latch; an ignition lock of conventional type; conventional electric window winders 4, a conventional central door locking system 5; and a delayed seat belt releasing device 6.

The system consists of a combination of mechanical and electrical elements connected to a central electronic instruction unit which in response of a shock detected by the impact sensor apparatus 1 causes opening or closing of its contacts so that all circuits are disconnected from the battery, a signal is transmitted which activates the central instruction unit 2 which in turn distributes a series of orders in delayed manner and progressively to the devices which usually are present in an automobile, like electric window winders 4, central controlled door locks 5, and to other units incorporated in the combination, like the delayed seat belt releasing device (6). The functions are progressively realized, designated to protect the passengers against impact, to prevent toxic smokes, including fire, all this being effected by inverting or suppressing all or a portion of the functions of usual elements which are necessary in normal use, and which convert into unnecessary and dangerous elements when an accident happens and which additionally creat great problems for the rescue or the help of the passengers.

## Claims

1. Automatic system for the protection and rescue of passengers of an automitive vehicle engaged in an accident, comprising impact sensor means (1) actuated by inertial forces created by an impact which interrupts a battery circuit of the vehicle and means (6) for releasing seat belts from their fixures subsequent to said impact, **characterized in** that it comprises a central instruction unit (2) to which said seat belt releasing means (6), an electrovalve (3) with latch for interrupting fuel flow from a tank of the vehicle, a central door locking system (5) and an electric window winder system (4) are connected, said central instruction unit (2) being adapted to control said electrovalve (3) to interrupt fuel flow upon an impact and to control said seat belt releasing means (6) and said door locking and window winder systems (5, 4) in a manner to automatically and delayed successively release said seat belts, unlock the doors and open the windows after an impact has been sensed by said impact sensor means (1).

## Patentansprüche

1. Automatisches System für Schutz und Hilfe für die Insassen eines in einen Unfall verwickelten Kraftfahrzeugs, enthaltend eine Aufprallsensoreinrichtung (1), die durch von einem Aufprall hervorgerufenen Trägheitskräften betätigt wird und einen Batteriekreis des Fahrzeugs unterbricht, und eine Einrichtung (6) zum Lösen der Sicherheitsgurte aus ihren Befestigungen im Anschluß an den Aufprall, **dadurch gekennzeichnet,** daß es eine zentrale Befehlseinheit (2) enthält, mit der die Sicherheitsgurtlöseeinrichtung (6), ein Elektroventil (3) mit Verriegelung zum Unterbrechen der Kraftstoffzufuhr von einem Fahrzeugtank, ein Zentraltürverriegelungssystem (5) und ein elektrisches Fensterhebersystem (4) verbunden sind und die dazu eingerichtet ist, das Elektroventil (3) im Sinne einer Unterbrechnung der Kraftstoffzufuhr bei einem Aufprall zu steuern und die Sicherheitsgurtlöseeinrichtung (6) und die Türverriegelungseinrichtungs- und Fensterhebersysteme (5, 4) so zu steuern, daß diese automatisch und verzögert nacheinander die Sicherheitsgurte lösen, die Türen entriegeln und die Fenster zu öffnen, nachdem von der Aufprallsensoreinrichtung (1) ein Aufprall ermittelt worden ist.

## Revendications

1. Système automatique pour la protection et le secours des passagers d'un véhicule automobile impliqué dans un accident, comprenant des moyens (1) de détection d'impact réagissant aux forces d'inertie créées lors d'un impact, qui interrompent un circuit de batterie du véhicule et des moyens (6) pour dégager des ceintures de sécurité de leur fixation suite au dit impact, caractérisé an ce qu'il comprend une unité d'instruction centrale (2) à laquelle sont reliés :
- les dits moyens (6) de dégagement des ceintures de sécurité,
- une électrovanne (3) à verrou pour arrêter le flux de carburant provenant d'un réservoir du véhicule,
- un système (5) centralisé de verrouillage des portières, et
- un système (4) de lève-vitre électrique,
la dite unité d'instruction centrale (2) étant adaptée pour commander la dite électrovanne (3) pour arrêter le flux de carburant en réponse à un impact et pour commander les dits moyens (6) de dégagement des ceintures de sécurité, et les dits systèmes (4, 5) de verrouillage de portières et de lève-vitre, de manière à dégager les dites ceintures de sécurité, déverrouiller les portières et ouvrir les vitres, automatiquement et successivement avec retard, après qu'un impact ait été détecté par les dits moyens (1) de détection d'impact.
